# EUROPÄISCHE PATENTSCHRIFT

(11) **EP 3 230 700 B1**
(45) Veröffentlichungstag und Bekanntmachung des Hinweises auf die Patenterteilung: **22.09.2021**
(21) Anmeldenummer: 15790973.0
(22) Anmeldetag: 09.11.2015
(51) Int. Cl.: G01F 23/24, G01F 23/26, G01N 27/07

(54) **SONDENEINHEIT**
PROBE UNIT
UNITÉ DE SONDE

(30) Priorität: 12.12.2014 DE 102014118547
(43) Veröffentlichungstag der Anmeldung: 18.10.2017
(73) Patentinhaber: Endress+Hauser SE+Co. KG, 79689 Maulburg (DE)
(72) Erfinder: SCHMIDT, Robert, 79650 Schopfheim (DE); KRUMBHOLZ, Andreas, 79689 Maulburg (DE); WERNET, Armin, 79618 Rheinfelden (DE); UPPENKAMP, Kaj, 79664 Wehr (DE)
(74) Vertreter: Andres, Angelika Maria
(86) Internationale Anmeldenummer: PCT/EP2015/076005
(87) Internationale Veröffentlichungsnummer: WO 2016/091497

(56) Entgegenhaltungen:
- EP-A1- 2 340 420
- WO-A1-97/37198
- WO-A1-2012/116851
- DE-A1- 3 036 347
- US-A1- 2013 276 532

## Beschreibung

Die vorliegende Erfindung betrifft eine Sondeneinheit mit zumindest abschnittsweise koaxialem Aufbau. Insbesondere betrifft die Erfindung eine Sondeneinheit für eine Vorrichtung zur kapazitiven und/oder konduktiven Bestimmung mindestens einer Prozessgröße eines Mediums in einem Behälter. Bei der Prozessgröße handelt es sich beispielsweise um den Füllstand und/oder die elektrische Leitfähigkeit und/oder die Permittivität des Mediums.

Auf dem kapazitiven oder konduktiven Prinzip beruhende Feldgeräte weisen in der Regel eine im Wesentlichen zylindrische Sondeneinheit mit zumindest einer Sondenelektrode auf, welche in den Behälter einbringbar ist. Zur Füllstandsmessung sind einerseits vertikal in den Behälter hineinreichende stabförmige Sondeneinheiten zur kontinuierlichen Messung und andererseits in die Wandung des Behälters einbringbare Sondeneinheiten zur Grenzstandmessung bekannt.

Weiterhin wird häufig zur Vermeidung von Ansatzbildung an der Sondenelektrode eine Zusatzelektrode, insbesondere eine sogenannte Guardelektrode, eingesetzt, welche die Sondenelektrode koaxial umgibt, von dieser mittels einer Isolierung getrennt ist, und auf dem gleichen elektrischen Potential wie die Sondenelektrode liegt, wie beispielsweise in der DE 32 12 434 C2 beschrieben. Insbesondere Sondeneinheiten zur Grenzstandmessung sind häufig derart ausgestaltet, dass die Sondenelektrode zumindest im Bereich des Prozessanschlusses koaxial von einer Guardelektrode umgeben ist.

Die zugrundeliegenden Messprinzipien der kapazitiven und konduktiven Füllstandsmessung sind aus einer Vielzahl von Veröffentlichungen bekannt.

Beim konduktiven Messverfahren wird der Füllstand überwacht, indem detektiert wird, ob über ein leitfähiges Medium ein elektrischer Kontakt zwischen einer Sondenelektrode und der Wandung eines leitfähigen Behälters oder einer zweiten Elektrode besteht. Entsprechende Feldgeräte werden von der Anmelderin beispielsweise unter der Bezeichnung Liquipoint hergestellt und vertrieben. Das konduktive Messprinzip stößt jedoch für elektrische Leitfähigkeiten ≤ 0,5µS/cm an seine Grenzen, da eine Änderung der Leitfähigkeit des Mediums im Verhältnis zur Leitfähigkeit von Luft dann zu gering ist, um noch sicher von der Messelektronik erfasst werden zu können. Bei diesen mit einem konduktiven Messverfahren schwer zu überwachenden Medien handelt es sich z.B. um destilliertes Wasser, Melasse oder Alkohole. Ebenfalls problematisch sind Medien mit einer elektrischen Leitfähigkeit kleiner 1µS/cm und einer Dielektrizitätskonstanten kleiner 20. In diesen Bereich fallen insbesondere Öle und Fette.

Hier eignet sich das kapazitive Messprinzip. Dabei wird der Füllstand des Mediums in einem Behälter aus der Kapazität des von einer Sondenelektrode und der Wandung des Behälters oder einer zweiten Elektrode gebildeten Kondensators ermittelt. Je nach Leitfähigkeit des Mediums bildet entweder das Medium selbst oder eine Isolierung der Sondenelektrode das Dielektrikum des Kondensators. Auch auf dem kapazitiven Messprinzip beruhende Feldgeräte werden von der Anmeldung in vielen unterschiedlichen Ausgestaltungen hergestellt und vertrieben, beispielsweise unter der Bezeichnung Liquicap oder Solicap. Die Füllstandsmessung mittels eines kapazitiven Messverfahrens ist zwar prinzipiell für leitfähige und nicht leitfähige Medien möglich, jedoch wird für Medien mit einer elektrischen Leitfähigkeit >50µS/cm eine Isolation der Messsonde notwendig, was zu verschiedenen Nachteilen für die Messung führen kann.

Da die Vor- und Nachteile des kapazitiven und konduktiven Messverfahrens gegenläufig sind, ist ein sogenannter Multisensor von Vorteil, welcher sowohl in einem konduktiven als auch in einem kapazitiven Betriebsmodus den Füllstand bestimmen kann. Durch die Verwendung eines solchen Sensors erfolgt die Füllstandsmessung unabhängig von den elektrischen Eigenschaften des Mediums. Bei der Konstruktion eines solchen Multisensors müssen jedoch verschiedene Punkte beachtet werden.

Beispielsweise wird die erreichbare Messauflösung im kapazitiven Betriebsmodus durch die geometrische Ausgestaltung der Sondeneinheit bestimmt. Wenn die Sondeneinheit beispielsweise so ausgestaltet ist, dass sie nach Einbau in der Wandung des Behälters mit dieser im Wesentlichen abschließt, wie beispielsweise bei dem von der Anmelderin unter dem Namen FTW33 vertriebenen Feldgerät, können die gemessenen Kapazitäten im Bereich von Femtofarad liegen. Ragt die Messsonde dagegen zumindest teilweise in den Behälter hinein, so liegen die Messwerte für die Kapazität bis zu mehrere Größenordnungen darüber.

Es versteht sich von selbst, dass die gemessenen Kapazitäten zwar unter anderem auch noch von den Mediumseigenschaften abhängen, jedoch sind diese Abhängigkeiten anwendungsspezifisch zu betrachten, und deshalb für die Frage der Konstruktion einer geeigneten Sondeneinheit zweitrangig.

Ein weiterer Punkt betrifft eine mit der Sondeneinheit zusammenhängende Elektronikeinheit, welche der Signalerfassung, -speisung und/oder-auswertung dient. Die dafür verwendeten Komponenten müssen an die jeweils zu erwartenden Messbereiche angepasst sein. Dies gilt insbesondere für den kapazitiven Betriebsmodus, in welchem Kapazitäten im Bereich von Femtofarad detektiert werden müssen, was höchste Anforderungen an die verwendete Elektronikeinheit stellt.

Schließlich ist ein entscheidender Punkt für die Konstruktion eines Multisensors gegeben durch die Kontaktierungen der Sondenelektrode und der Zusatzelektrode sowie deren Verbindung mit der Elektronikeinheit. Am häufigsten werden wohl Kabel mit Litzen für Elektrodenkontaktierungen verwendet. Dabei werden die Litzen an die zu kontaktierenden Elemente angelötet, während die verschiedenen Kabel in einen gemeinsamen Stecker münden. Eine elegantere Methode ist aus der EP1378014B1 bekannt geworden und beschreibt die Verwendung flexibler Leiterplatten zur Kontaktierung von in einem Stapel angeordneter piezoelektrischer Elemente. Die flexible Leiterplatte weist dazu eine Vielzahl von Kontaktfahnen auf, welche durch Umbiegen wischen die piezoelektrischen Elemente geklebt werden können. Diese Lösung ist zwar insbesondere platzsparender als die Verwendung von Kabeln mit Litzen, jedoch kompliziert und aufwendig in der Fertigung.

Eine einfachere Kontaktierungsmöglichkeit unter Verwendung einer flexiblen Leiterplatte ist aus der DE102011086216A1 bekannt geworden. Beschrieben ist eine für den kapazitiven und/oder konduktiven Betriebsmodus typische Sondeneinheit mit einem Kontaktierungsmodul, mittels welchem die Sondenelektrode und die Zusatzelektrode über die flexible Leiterplatte kontaktiert werden. Das Kontaktierungsmodul weist eine Isolierhülse und ein Modulgehäuse auf. Die Isolierhülse ist zur Aufnahme eines Abschnitts der stabförmigen Sondenelektrode und zur Aufnahme der flexiblen Leiterplatte ausgestaltet. Dazu weist die Isolierhülse ein Auflageelement auf, welches der Auflage zweier Kontaktbereiche der Leiterplatte dient, und welches gleichzeitig eine elektrische Trennung zwischen den zwei Kontaktbereichen der Leitplatte sicherstellt. Das Modulgehäuse hält den Aufbau zusammen, und dient insbesondere der Fixierung der beiden Kontaktbereiche der flexiblen Leiterplatte. Es ist aus einem elektrisch isolierenden Material gefertigt, vorzugsweise aus einem Kunststoff.

Bei einem solchen Kontaktierungsmodul dient die im koaxialen Aufbau der Sondeneinheit innen liegende Elektrode also als Halterung für das Kontaktierungsmodul, wozu es zumindest auf einem Abschnitt, dessen Länge der Höhe des Kontaktierungsmoduls und eines Befestigungsmittels entspricht, nicht von der äußeren Elektrode umgeben ist. Die Isolierung zwischen Sondenelektrode und Zusatzelektrode kann durch ein Element aus einem elektrisch isolierenden Material wie zum Beispiel Kunststoff, Glas, oder auch in Form eines Luftspalts realisiert sein.

WO2012/116851A1 offenbart eine Sondeneinheit mit einem Sondengehäuse, einer stabförmigen Sondenelektrode, einer Zusatzelektrode und einem Kontaktierungsmodul, welches auf einen in dem Sondengehäuse angeordneten stabförmigen Abschnitt der Sondenelektrode aufbringbar ist, und welches eine flexible Leiterplatte mit mindestens einer ersten Leiterbahn zur elektrischen Kontaktierung der Sondenelektrode und mindestens einer zweiten Leiterbahn zur elektrischen Kontaktierung der Zusatzelektrode aufweist.

Da das Sondengehäuse als Massepotential dient, können jedoch in jenem Bereich, in welchem die Sondenelektrode nicht von der Zusatzelektrode umgeben ist, durch Kapazitäten zwischen der Sondenelektrode und dem Sondengehäuse auftreten. Dies führen zu Störeinflüssen bei der Signalübertragung von der Sondeneinheit zur Elektronikeinheit. Diese Störeinflüsse sind umso signifikanter, je kürzer die Sondeneinheit ist. Insbesondere bei solchen Sondeneinheiten, im eingebauten Zustand im Wesentlichen mit der Wandung des Behälters abschließen, wie zum Beispiel beim zuvor genannten FTW33, bei welchen die gemessenen Kapazitäten im Bereich von Femtofarad liegen können, kann durch die Störeinflüsse eine korrekte Erfassung der gemessenen Kapazitäten verhindert werden.

Der vorliegenden Erfindung liegt die Aufgabe zugrunde, eine einfache Kontaktierungsmöglichkeit für eine Sondeneinheit mit zumindest abschnittsweise koaxialem Aufbau bereitzustellen, mittels welcher eine vollständige elektrische Abschirmung der Sondenelektrode gewährleistet ist.

Diese Aufgabe wird gelöst durch eine Sondeneinheit mit den Merkmalen des Anspruchs 1. Vorteilhafte Ausgestaltungen der Sondeneinheit sind Gegenstand der Unteransprüche.

Die Sondeneinheit umfasst zumindest
- ein Sondengehäuse,
- eine zumindest abschnittsweise stabförmige Sondenelektrode,
- eine Zusatzelektrode, welche die Sondenelektrode zumindest abschnittsweise koaxial umgibt und durch eine elektrische Isolierung von der Sondenelektrode getrennt ist,
- ein erstes Befestigungsmittel, mittels welchem die Zusatzelektrode in dem Sondengehäuse befestigt ist,
- ein Kontaktierungsmodul, welches auf einen in dem Sondengehäuse angeordneten stabförmigen Abschnitt der Sondenelektrode aufbringbar ist, und
- ein zweites Befestigungsmittel zur Befestigung des Kontaktierungsmoduls an der Sondenelektrode,
wobei das Kontaktierungsmodul zumindest folgende Komponenten umfasst:
-- eine Isolierhülse, welche einen im Wesentlichen zylindrischen Grundkörper zur Aufnahme eines Abschnitts der stabförmigen Sondenelektrode und ein im Wesentlichen orthogonal zu dem Grundkörper ausgerichtetes flächiges Auflageelement, welches den Grundkörper in einen ersten Abschnitt und einen zweiten Abschnitt unterteilt, aufweist,
-- eine flexible Leiterplatte mit mindestens einer ersten Leiterbahn zur elektrischen Kontaktierung der Sondenelektrode und einer zweiten Leiterbahn zur elektrischen Kontaktierung der Zusatzelektrode, welche flexible Leiterplatte in einem Endbereich über einen ersten Kontaktbereich verfügt, in welchen die erste Leiterbahn mündet, und über einen zweiten Kontaktbereich, in welchen die zweite Leiterbahn mündet, wobei der erste Kontaktbereich und der zweite Kontaktbereich jeweils eine zentrale Ausnehmung aufweisen, deren Durchmesser mindestens gleich dem Außendurchmesser des Grundkörpers der Isolierhülse ist, und wobei zumindest die zentralen Ausnehmungen des ersten Kontaktbereiches und des zweiten Kontaktbereiches durch Umfalten der Leiterplatte in Deckung bringbar sind, sodass der erste Kontaktbereich auf den ersten Abschnitt des Grundkörpers und der zweite Kontaktbereich auf den zweiten Abschnitt des Grundkörpers aufbringbar ist,
-- ein Modulgehäuse, und
wobei die Sondeneinheit eine erste Kontaktscheibe aufweist, welche erste Kontaktscheibe auf den ersten Abschnitt des Grundkörpers der Isolierhülse aufbringbar ist und die erste Leiterbahn in dem ersten Kontaktbereich elektrisch kontaktiert.

Ferner ist erfindungsgemäß vorgesehen, dass
- das Modulgehäuse elektrisch leitfähig ist,
- dass das Modulgehäuse eine zweite Kontaktscheibe aufweist, welche zweite Kontaktscheibe auf den zweiten Abschnitt des Grundkörpers der Isolierhülse aufbringbar ist und die zweite Leiterbahn im zweiten Kontaktbereich elektrisch kontaktiert,
- dass das Modulgehäuse eine topfförmige Geometrie aufweist, mit einer von der zweiten Kontaktscheibe ausgehenden parallel zum Grundkörper verlaufenden zylindrischen Wandung, welche Wandung zumindest die Sondenelektrode im Bereich in welchem das Kontaktierungsmodul aufgebracht ist, die Isolierhülse zumindest im Bereich des Auflageelements und die flexible Leiterplatte zumindest im Bereich der beiden Kontaktbereiche umgibt und elektromagnetisch abschirmt, und
- dass die erste Kontaktscheibe einen geringeren Außendurchmesser aufweist als die zweite Kontaktscheibe.

Die Erfindung ist prinzipiell für alle Sondeneinheiten mit zwei zu kontaktierenden Elementen, welche zumindest abschnittsweise in einem koaxialen Aufbau angeordnet sind, geeignet. Insbesondere geeignet ist die Erfindung jedoch für Sondeneinheiten von Vorrichtungen zur kapazitiven oder konduktiven Bestimmung und/oder Überwachung von mindestens einer Prozessgröße eines Mediums in einem Behälter.

Das Auflageelement dient als flächige Auflage der beiden Kontaktbereiche der flexiblen Leiterplatte. Gleichzeitig stellt es eine elektrische Trennung zwischen den beiden Kontaktbereichen sicher, welche vorzugsweise ringförmig und über einen Steg miteinander verbunden sind, sodass die beiden Ausnehmungen durch Umklappen des zweiten Kontaktbereiches über den ersten Kontaktbereich übereinander positionierbar sind. Die beiden Abschnitte, in welche das Auflageelement den Grundkörper der Isolierhülse unterteilt, können dabei gleich oder verschieden lang sein.

Sowohl die erste Kontaktscheibe als auch das Modulgehäuse sind aus einem elektrisch leitfähigen Material gefertigt. Da die innerhalb des koaxialen Aufbaus innen liegende Elektrode, der Sondenelektrode, der Einfachheit des Aufbaus der Kontaktierungsmöglichkeit her geschuldet als Halterung für das Kontaktierungsmodul dient, ist sie zumindest in dem Bereich, in welchem sich das Kontaktierungsmodul befindet, nicht von der äußeren Elektrode umgeben. In diesem Bereich sorgt erfindungsgemäß das Modulgehäuse mit seiner topfförmigen Ausgestaltung für eine vollständige elektromagnetische Abschirmung der Sondenelektrode derart, dass die weiter oben beschriebenen Störeinflüsse vermieden werden können. Dies ist insbesondere bei kurzen Sondeneinheiten, insbesondere bei solchen, welche im Wesentlichen frontbündig mit der Wandung des Behälters abschließen, von großer Bedeutung.

Neben der elektromagnetischen Abschirmwirkung zeichnet sich das erfindungsgemäße Kontaktierungsmodul durch einen platzsparenden, kompakten und einfachen Aufbau aus, was wiederum insbesondere bei frontbündig im Wesentlichen mit der Wandung des Behälters abschließenden Sondeneinheiten, für deren Kontaktierung besonders wenig Platz zur Verfügung steht, wichtig.

Die erfindungsgemäße Lösung ist ferner kostengünstig in der Fertigung sowie im Materialbedarf.

Zur Isolierung zwischen der Sondenelektrode und Zusatzelektrode kann zusätzlich noch ein Element aus einem elektrisch isolierenden Material wie Kunststoff oder Glas realisiert sein, oder in Form eines Luftspalts vorliegen. Eine Kombination dieser beiden Varianten ist ebenfalls möglich. Das Sondengehäuse ist schließlich vorzugsweise metallisch und dient als Massepotential.

In einer ersten besonders bevorzugten Ausgestaltung ist die die flexible Leiterplatte eine Semiflex-Leiterplatte, insbesondere eine aus zumindest zwei Schichten aufgebaute Leiterplatte mit einer ersten Schicht, in welcher zumindest abschnittsweise die erste Leiterbahn verläuft, und mit einer zweiten Schicht, in welcher zumindest abschnittsweise die zweite Leiterbahn verläuft. Die Wahl einer Semiflex-Leiterplatte bietet den besten Kompromiss aus Stabilität und Biegesteifigkeit.

Dabei ist die flexible Leiterplatte in einer ersten Variante eine dreilagige Leiterplatte mit einer ersten Schicht, einer zweiten Schicht und einer dritten Schicht, wobei die zweite Schicht zwischen der ersten Schicht und der dritten Schicht angeordnet ist, wobei die erste Leiterbahn in der zweiten Schicht verläuft, wobei die zweite Leiterbahn zumindest in dem Beriech bis zu den beiden Kontaktbereichen in einen ersten Zweig und in einen zweiten Zweig untergliedert ist, und wobei der erste Zweig der zweiten Leiterbahn in der ersten Schicht verläuft, und wobei der zweite Zweig der zweiten Leiterbahn in der dritten Schicht verläuft. Das Messsignal der Sondenelektrode verläuft also entlang der mittleren Schicht, während das Signal der Zusatzelektrode in der oberen und unteren Schicht geführt wird. Die Wahl einer dreilagigen Leiterplatte ermöglicht also eine elektromagnetische Abschirmung der Sondenelektrode gegenüber dem Sondengehäuse auch im Bereich der flexiblen Leiterplatte, welcher sich nicht innerhalb des Modulgehäuses befindet.

In einer zweiten Variante ist die flexible Leiterplatte eine zweilagige Leiterplatte mit einer ersten Schicht und einer zweiten Schicht, und mit einem in Bezug auf die Längsrichtung der Leiterplatte ersten und zweiten Teilbereich, wobei im ersten Teilbereich die erste Leiterbahn in der ersten Schicht und die zweite Leiterbahn in der zweiten Schicht verläuft, und wobei im zweiten Teilbereich die zweite Leiterbahn in der ersten Schicht und die erste Leiterbahn in der zweiten Schicht verläuft. Während eine zweilagige Leiterplatte vorteilhaft günstiger und flexibler als eine dreilagige Leiterplatte ist, kann sie eine elektromagnetischen Abschirmung der ersten Leiterbahn, in welchem das Messsignal der Sondenelektrode geführt wird, lediglich zu einer Seite hin gewährleisten. Dies ist oftmals ausreichend. Nun kann es aber auch vorkommen, dass sich in einem ersten Teilbereich eine erste Seite der Leiterplatte am nächsten am Sondengehäuse befindet, und in einem zweiten Teilbereich eine andere, insbesondere die gegenüberliegende Seite der Leiterplatte, derart dass in unterschiedlichen Teilbereichen eine elektromagnetische Abschirmung in unterschiedlichen Richtungen notwendig ist. Durch die Aufteilung der Leiterbahn in zwei Teilbereiche, wobei die beiden Leiterbahnen zwischen den beiden Teilbereichen die Schicht wechseln ermöglicht es, kann dies erfindungsgemäß gewährleistet werden. Es versteht sich von selbst, dass die Leiterplatte je nach der aktuellen Situation auch in mehr als zwei Teilbereiche unterteilt werden kann, so dass die Richtung der Abschirmung mehr als einmal entlang der Leiterbahn wechselt.

In einer weiteren bevorzugten Ausgestaltung weist die Wandung des Modulgehäuses zumindest eine Aussparung auf, welche der Einbringung der flexiblen Leiterplatte in das Kontaktierungsmodul mit einer Orientierung senkrecht zu dessen Wandung dient. Diese Ausgestaltung ermöglicht es also, die Leiterplatte seitlich aus dem Modulgehäuse herauszuführen. Durch die Wahl einer derartigen Geometrie kann der Durchmesser des Modulgehäuses und damit der Platzbedarf des Kontaktierungsmoduls gegenüber einer Variante ohne Aussparungen verkleinert werden. Dabei weist die Wandung des Modulgehäuses bevorzugt genau zwei Aussparungen auf, welche sich gegenüberliegen, wobei die Leiterplatte durch die erste Aussparung in das Kontaktierungsmodul eingebracht ist, und wobei im Bereich der zweiten Aussparung der Wandung zumindest teilweise der Bereich der Leiterplatte, welcher zwischen den beiden Kontaktbereichen verläuft, angeordnet ist. Durch das Umklappen des zweiten Kontaktbereiches über den ersten ragt nämlich zumindest ein Teil des Bereichs der Leiterplatte zwischen den beiden Kontaktbereichen über das flächige Auflageelement der Isolierhülse hinaus. Dies muss normalerweise bei der Bestimmung des Radius des Modulgehäuses berücksichtigt werden. Werden jedoch zwei sich auf gegenüberliegenden Seiten des Modulgehäuses befindende Aussparungen in die zylindrische Wandung des Modulgehäuses integriert, kann der Radius des Modulgehäuses minimiert werden.

In einer nächsten besonders bevorzugten Ausgestaltung ist ein Fixierungselement lösbar auf das Modulgehäuse aufgebracht, welches die flexible Leiterplatte im Wesentlichen in einer Ebene arretiert und die zumindest eine Aussparung in der Wandung des Modulgehäuses im Wesentlichen schließt. Die Verwendung eines Fixierungselements bringt zwei Vorteile: Zum einen erlaubt es eine Fixierung der Leiterplatte innerhalb des Modulgehäuses derart, dass die Position der Kontaktbereiche der Leiterplatte auf den beiden Abschnitten des Grundkörpers der Isolierhülse im Wesentlichen fest angeordnet ist. Zum anderen hat die Integration von Aussparungen innerhalb der Wandung des Modulgehäuses neben den bereits genannten Vorteilen auch einen Nachteil, nämlich, dass die mindestens eine Aussparung die elektrische Abschirmwirkung des Modulgehäuses reduziert. Durch eine geeignete Ausgestaltung des Fixierungselements können diese Aussparungen jedoch durch die Einbringung des wieder geschlossen werden, so dass insgesamt eine gute Abschirmwirkung bei minimiertem Platzbedarf erreicht werden kann.

Es ist dabei von Vorteil, wenn das Fixierungselement mittels einer Presspassung mit Kraftschluss auf das Modulgehäuse aufgebracht ist. Dies erlaubt eine besonders einfache Fixierung ohne die Notwendigkeit separater Teile zur Fixierung.

In einer bevorzugten Ausgestaltung ist die Dicke des flächigen Auflageelements der Isolierhülse variabel, insbesondere ist die Dicke in einem ersten dem Grundkörper zugewandten Anfangsbereich und im dem Grundkörper abgewandten Endbereich dicker als im dazwischenliegenden Mittelbereich, und wobei die Dicke des Endbereichs maximal so groß wie die im Anfangsbereich ist.

Die positionsabhängige Variation der Dicke, das ist die Ausdehnung des Isolierelements in Parallelrichtung zum Grundkörper, des Auflageelements dient dabei der Führung der Leiterplatte vom ersten in den zweiten Kontaktbereich, derart, dass Knicke der Leiterplatte als Folge des Umklappens der Kontaktbereiche und Positionierens innerhalb des Gehäusemoduls vermieden werden können.

In einer weiteren vorteilhaften Ausgestaltung ist die Sondenelektrode in einem in das Sondengehäuse hineinragenden Endbereich frei von der Zusatzelektrode, wobei das Kontaktierungsmodul derart auf die Sondenelektrode aufgebracht ist, dass die zweite Leiterbahn zumindest teilweise auf der Zusatzelektrode aufliegt. Das Kontaktierungsmodul liegt dann mit einer Unterseite an der äußeren Elektrode an, sodass die Kontaktierung mit dem Aufbringen des Kontaktierungsmoduls auf die Sondenelektrode hergestellt ist.

Es ist von Vorteil, wenn es sich bei dem ersten Befestigungsmittel um eine Mutter handelt, welche auf die Zusatzelektrode aufgebracht ist und/oder wenn es sich bei dem zweiten Befestigungsmittel um eine Mutter handelt, welche auf die Sondenelektrode aufgebracht ist.

Es ist ebenfalls von Vorteil, wenn zwischen dem Kontaktierungsmodul und dem zweiten Befestigungsmittel ein federndes Element oder eine mitverspannte federnde Schraubensicherung angeordnet ist. Auf diese Weise kann auch bei thermischen Ausdehnungen eine konstante Kraftwirkung durch das Befestigungsmittel gewährleistet werden.

Schließlich ist es von Vorteil, wenn zumindest das Gehäusemodul und das Fixierungselement elektrisch leitfähig sind, insbesondere aus einem Metall, bestehen.

Die Erfindung wird anhand der nachfolgenden Figuren Fig. 1 bis Fig. 6 genauer beschrieben. Es zeigt:
Fig. 1 eine schematische Darstellung eines für die kapazitive und/oder konduktive Messmethode geeigneten Messgeräts mit einer Guardelektrode gemäß Stand der Technik,
Fig. 2 den schematischen Aufbau einer ersten Ausgestaltung einer erfindungsgemäßen Sondeneinheit in einer Schnittdarstellung,
Fig. 3 den schematischen Aufbau einer zweiten Ausgestaltung einer erfindungsgemäßen Sondeneinheit in einer Schnittdarstellung,
Fig. 4 den schematischen Aufbau einer dritten Ausgestaltung einer erfindungsgemäßen Sondeneinheit in einer Schnittdarstellung,
Fig. 5 Detailzeichnungen eines Kontaktierungsmoduls gemäß der dritten Ausgestaltung (a) in einer Explosionsdarstellung, (b) in einer Schnittdarstellung (c) in einer perspektivischen Darstellung.
Fig. 6 eine flexible Leiterplatte in (a) zweilagiger und (b) dreilagiger Ausführung

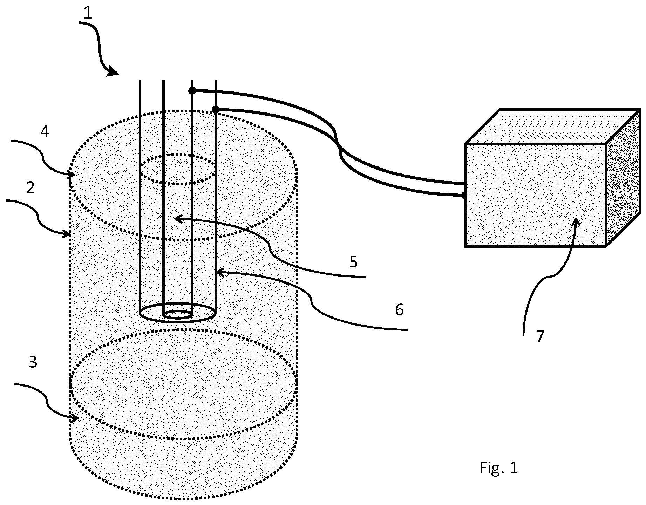

In Fig. 1 ist eine typische Sondeneinheit 1 gemäß dem Stand der Technik gezeigt, mittels welcher ein Füllstand im kapazitiven und/oder konduktiven Betriebsmodus überwacht werden kann. Die Sondeneinheit 1 ist an einem Behälter 2 angeordnet und ragt zum Teil in diesen hinein. Der Behälter 2 wiederum ist zumindest teilweise mit einem Medium 3 gefüllt. Die Sondeneinheit 1 setzt sich im vorliegenden Beispiel aus einer Sondenelektrode 5 und einer diese koaxial umgebenden, von dieser isolierten Zusatzelektrode, der sogenannten Guardelektrode 6 zusammen, welche der Vermeidung von Ansatzbildung dient. Die Sondeneinheit 1 ist außerhalb des Behälters 2 mit einer Elektronikeinheit 7 verbunden, welche zur Signalerfassung, - auswertung und/oder -speisung verantwortlich ist. Insbesondere ermittelt die Elektronikeinheit mittels des von der Sondenelektrode empfangenen Antwortsignals den Füllstand des Mediums 3 in dem Behälter 2. Während im hier gezeigten Beispiel die Geometrie der Sondeneinheit 1 derart gewählt ist, dass die Sondenelektrode 5 und die Zusatzelektrode 6 teilweise in den Behälter 2 hineinragen, versteht es sich von selbst, dass auch andere Ausgestaltungen der Sondeneinheit mit zumindest abschnittsweise koaxialem Aufbau unter die vorliegende Erfindung fallen, insbesondere solche Sondeneinheiten, welche im Wesentlichen mit der Wandung des Behälters 2 abschließen, wie für den von der Anmelderin hergestellten und vertriebenen FTW33.

Die Sondenelektrode 5 und die Zusatzelektrode 6 werden zur Verbindung mit der Elektronikeinheit 7 wird mittels eines erfindungsgemäßen Kontaktierungsmoduls kontaktiert. Eine Auswahl der denkbaren Ausgestaltungen eines solchen Kontaktierungsmoduls 8 ist in den folgenden Figuren gezeigt. Es versteht sich jedoch von selbst, dass auch andere, hier nicht gezeigte Ausgestaltungen denkbar sind, welche ebenfalls unter die Erfindung fallen.

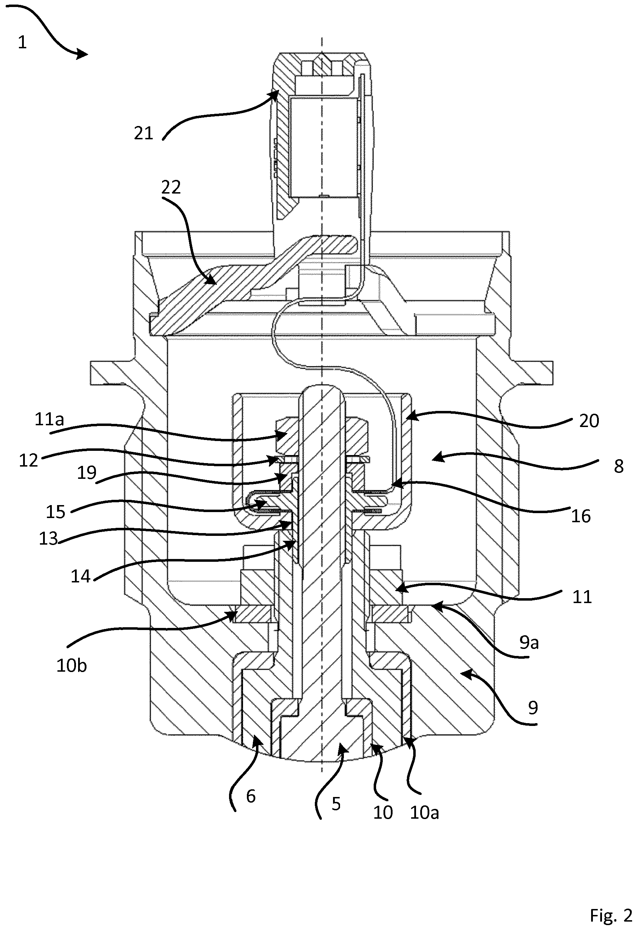

In Fig. 2 ist ein schematischer Aufbau eines Ausschnitts einer Sondeneinheit mit einer ersten erfindungsgemäßen Ausgestaltung eines Kontaktierungsmoduls 8 gemäß Anspruch 1 in einer Schnittdarstellung gezeigt. Die Sondenelektrode 5, welche der Messung des Füllstands dient ragt mit einem stabförmigen Abschnitt in das Sondengehäuse 9 hinein, und ist koaxial von einer Zusatzelektrode, welche auf das gleiche Potential wie die Sondenelektrode 5 gelegt wird, umgeben. Dabei sind die Sondenelektrode 5 und die Zusatzelektrode 6 über eine Isolierung 10 voneinander elektrisch getrennt. Die Zusatzelektrode 6 ist in Richtung des Gehäuseinneren kürzer gearbeitet als die Sondenelektrode 5, sodass die Sondenelektrode 5 im Sondengehäuse 9 über die Zusatzelektrode 6 hinausragt.

Zur Einbringung der Sondeneinheit 1 in den Behälter 2 mit dem Medium 3 kann das Sondengehäuse 9 beispielsweise ein Gewinde aufweisen, über welches es mittels einer passenden Muffe in die Wandung 4 des Behälters 3 einschraubbar ist.

Das Sondengehäuse 9 kann außerdem neben einem Schutz der von ihm beherbergten Elemente vor Umwelteinflüssen wie Feuchteablagerungen auch als Masseelektrode dienen. Es ist abschnittsweise rohrförmig ausgestaltet und weist einer Verjüngung 9a zur Befestigung der Sondenelektrode 5 und der Zusatzelektrode 6 auf. Dabei ist die Zusatzelektrode 6 mittels einer zweiten Isolierung 10a vom Sondengehäuse 9 getrennt. Die Einheit aus den beiden Elektroden 5,6, den beiden Isolierungen 10,10a und dem Sondengehäuse 9 bilden einen koaxialen Aufbau, dessen Achse durch die Längsachse des Sondengehäuses 9 gegeben ist.

Innerhalb des Sondengehäuses 9 ist ein erstes Befestigungsmittel in Form einer ersten Mutter 11 auf den rohrförmigen, in das Gehäuse hineinragenden Abschnitt der Zusatzelektrode 6, aufgebracht, welches die Zusatzelektrode an der Verjüngung 9a befestigt. Dabei sorgt eine dritte Isolierung 10b für eine elektrische Trennung der mit der Zusatzelektrode 6 in elektrisch leitfähigem Kontakt stehenden ersten Mutter 11 vom Sondengehäuse 9. Ein zweites Befestigungsmittel in Form einer zweiten Mutter 11a ist auf den stabförmigen in dem Sondengehäuse 9 angeordneten Abschnitt der Sondenelektrode 5 aufgebracht und mittels eines Gewindeeingriffs festziehbar. Das Befestigen der zweiten Mutter 11a bewirkt eine zum Gehäuseinneren hin gerichtete Anziehkraft auf die Elemente des axialen Aufbaus und somit eine feste Verbindung der einzelnen Elemente.

Das Kontaktierungsmodul 8 ist schließlich zwischen der Zusatzelektrode 6 und der zweiten Mutter 11a angeordnet. Vorteilhaft befindet sich zwischen dem Kontaktierungselement 8 und der zweiten Mutter 11a ein federndes Element 12 in Form einer Zahnscheibe, oder eines anderes mitverspanntes federnden Elements, oder eines Federelements, wie beispielsweise ein oder mehrere Tellerfedern oder eine Spiralfeder. Durch diese Maßnahme werden thermische Ausdehnungseffekte in axialer Richtung kompensiert, wodurch eine dauerhafte Anzugskraft der zweiten Mutter 11a und somit ein dauerhafter Kontakt der über das Kontaktierungsmodul 8 hergestellten elektrischen Kontaktierungen der Sondenelektrode 5 und Zusatzelektrode 6 gewährleistet ist. Durch die Verwendung von zwei Muttern 11, 11a ist der Aufbau ferner gegenüber einem Aufdrehen einer der beiden Muttern 11, 11a geschützt, wie es beispielswese beim Auftreten starker Erschütterungen oder Vibrationen im Prozess auftreten kann.

Das Kontaktierungsmodul 8 weist eine Isolierhülse 13 mit einem zylindrischen Grundkörper 14, einem Auflageelement 15 und eine flexible Leiterplatte 16 auf, wobei das Kontaktierungsmodul 8 über den Grundkörper 14 in einfacher Weise auf die Sondenelektrode 5 aufsteckbar ist. Dabei bewirkt die Isolierhülse 13 eine genaue Zentrierung des stabförmigen Abschnitts der Sondenelektrode 5 im rohrförmigen Abschnitt der Zusatzelektrode 6 und verhindert eine Beschädigung der flexiblen Leiterplatte 16 durch ein in den stabförmigen Abschnitt der Sondenelektrode 5 eingebachten Gewinde. Darüber hinaus sorgt die Isolierhülse 13 für eine elektrische Trennung zwischen der Zusatzelektrode 6 und der Sondenelektrode 5.

Das flächige Auflageelement 15 dient der Auflage der beiden Kontaktbereiche 16a, 16b (hier nicht gezeigt) der flexiblen Leiterplatte 16, welche vorzugsweise scheibenförmig sind mit einer zentralen Ausnehmung, deren Durchmesser mindestens dem Durchmesser des Grundkörpers entwpricht. Die Leiterplatte 16 wird derart auf die Isolierhülse 13 aufgesteckt, dass sich die zu kontaktierenden Leiterbahnen 17,18 (hier nicht gezeigt) jeweils auf derjenigen Seite befinden, welche von dem Auflageelement 15 abgewandt ist. Dabei gewährleistet das Auflageelement 15, dass keine Kurzschlüsse zwischen den beiden Kontaktbereichen der flexiblen Leiterplatte 16 auftreten können.

Auf den ersten der beiden Kontaktbereiche 16a der flexiblen Leiterplatte 16 folgt eine erste Kontaktscheibe 19, welche der elektrischen Kontaktierung der Sondenelektrode mit der ersten Leiterbahn 17 der flexiblen Leiterplatte 16 dient, und welche auf den ersten Abschnitt des Grundkörpers 14 der Isolierhülse 13 aufbringbar ist. In der hier gezeigten Ausgestaltung befindet sich der erste Abschnitt 14 auf der kurzen Seite und der zweite Abschnitt auf der langen Seite des Grundkörpers 14. Auf den zweiten der beiden Kontaktbereiche 16b der flexiblen Leiterplatte 16, welche im zweiten Abschnitt des Grundkörpers 14 angeordnet ist folgt das Modulgehäuse 20 in Form einer zweiten Kontaktscheibe mit einer von der zweiten Kontaktscheibe ausgehenden parallel zum Grundkörper verlaufenden Wandung, welche die Isolierhülse 13 zumindest im Bereich des Auflageelements 15 und die flexible Leiterplatte 16 zumindest im Bereich der Kontaktbereiche 16a, 16b umgibt und elektromagnetisch gegenüber dem Sondengehäuse abschirmt. Das Modulgehäuse 20 weist also eine topfförmige Geometrie auf. Sowohl das Modulgehäuse 20 als auch die erste Kontaktscheibe sind aus einem elektrisch leitfähigen Material gefertigt, insbesondere aus Messing, Kupfer oder Edelstahlt. Dabei ist die Formgebung der ersten Kontaktscheibe 19 und der zweiten Kontaktscheibe des Modulgehäuses 20 an die der Leiterplatte 16 und Isolierhülse 13 angepasst, also im hier gezeigten Beispiel scheibenförmig mit einer zentralen Ausnehmung. Ferner ist der Außendurchmesser der ersten Kontaktscheibe kleiner als derjenige der zweiten Kontaktscheibe.

Die flexible Leiterplatte 16 wird oben aus dem Kontaktierungsmodul 8 und aus dem Sondengehäuse 9 herausgeführt, sodass eine Elektronikeinheit 7 auf sie zugreifen kann. Hierzu ist auf den freien, d.h. den nicht auf die Isolierhülse 13 aufgesteckten, Endbereich der Leiterplatte 16 ein Stecker 21 aufgebracht, welcher mit einem entsprechenden Gegenstück der Elektronikeinheit 7 verbindbar ist. Der Stecker 32 weist vorzugsweise Buchsen zum Kontaktieren der Leiterbahnen 18, 19 auf, kann jedoch auch Kontaktstifte aufweisen. Zur Fixierung des Steckers 10 an einer vorgesehenen Position ist ein Haltesockel 22 mit dem Stecker 21 verbunden. Beispielsweise ist der Haltesockel 22 in eine Nut in dem Sondengehäuse 9 einklemmbar.

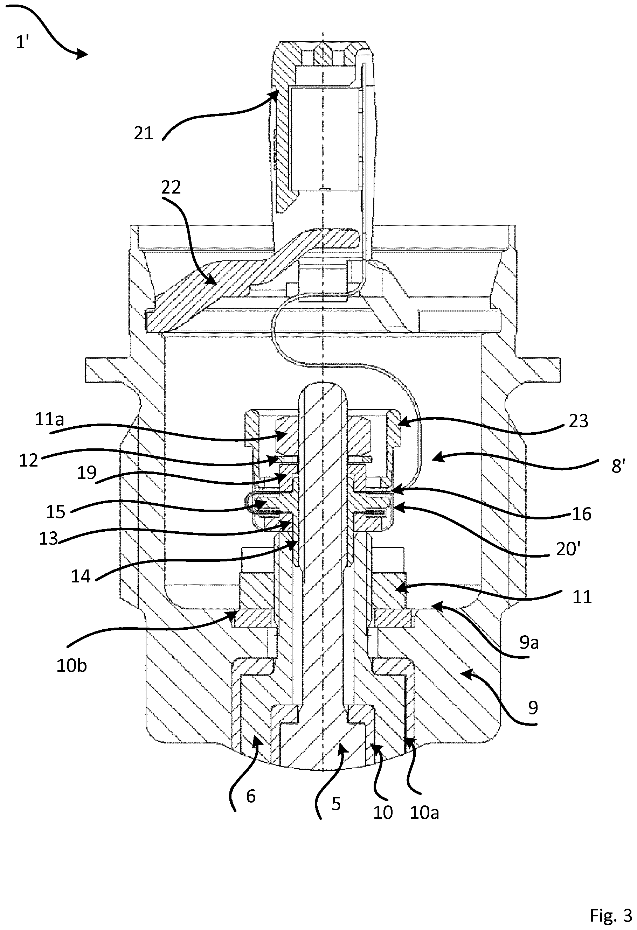

Eine zweite erfindungsgemäße Ausgestaltung eines Kontaktierungsmoduls 8' in einem schematischen Aufbau zusammen mit dem zu dem in Fig. 1 gezeigten analogen Ausschnitt der Sondeneinheit 1' ist Gegenstand der Schnittdarstellung in Fig. 3. Auf in Zusammenhang mit Fig. 2 erläuterte Bezugszeichen wird deshalb hier nicht erneut eingegangen.

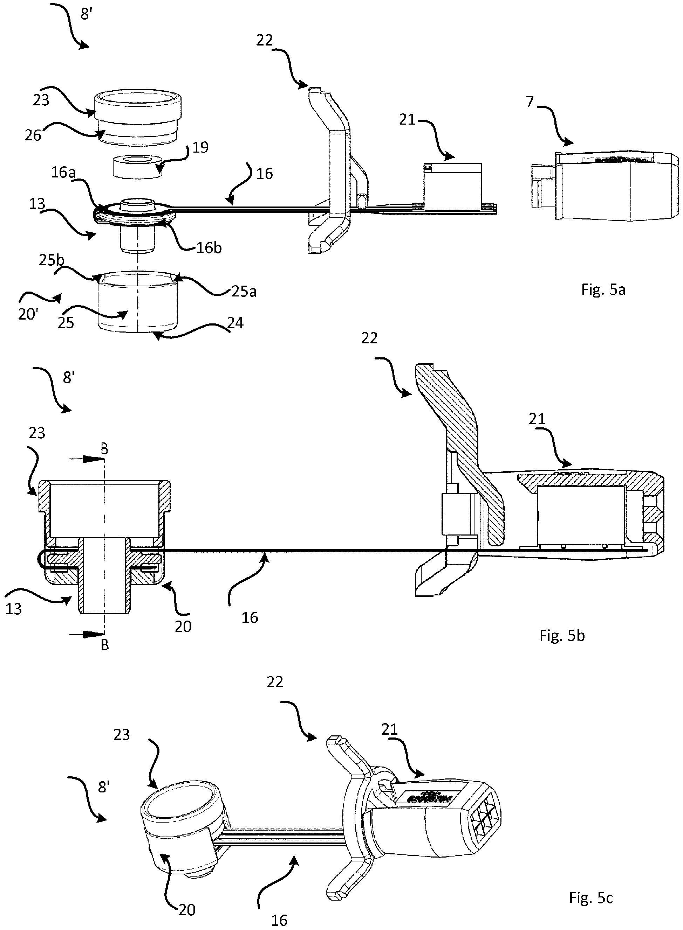

Der wesentliche Unterschied zwischen den Ausgestaltungen in Fig. 2 bzw. Fig. 3 betrifft das Kontaktierungsmodul 8 bzw. 8' und ist dadurch gegeben, dass für die in Fig. 3 gezeigte Ausgestaltung des Kontaktierungsmoduls 8' ein Fixierungselement 23 integriert ist. Das Fixierungselement ist lösbar mittels einer Presspassung mit Kraftschluss auf das Modulgehäuse 20' aufgebracht. Aus diesem Grund ist die Ausgestaltung des Modulgehäuses 20' ebenfalls leicht modifiziert. Während die genaue Ausgestaltung des Modulgehäuses 20' detailliert im Zusammenhang mit Fig. 5 beschrieben werden wird, sei hier bereits vermerkt, dass die zylindrische Wandung des Modulgehäuses 20' gegenüber der Ausgestaltung wie in Fig. 2 gezeigt, verkürzt ist. Ferner weist die Wandung des Modulgehäuses 20' zwei Aussparungen auf. Aus der ersten Aussparung wird seitlich die flexible Leiterplatte 16 aus dem Modulgehäuse 20' herausgeführt. Aus der zweiten Aussparung ragt der Bereich der flexiblen Leiterplatte 16, welcher sich zwischen den beiden Kontaktbereichen 16a, 16b befindet heraus.

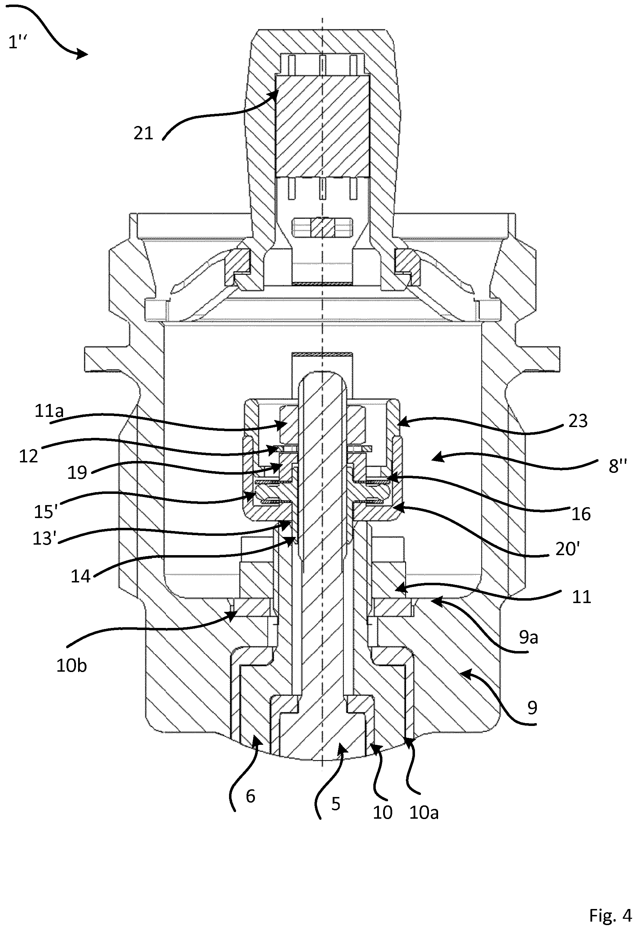

In Fig. 4 ist schließlich eine erneut leicht modifizierte Ausgestaltung des Kontaktierungsmoduls 8" gezeigt, jedoch in einer gegenüber den Fig. 2 und Fig. 3 um 90° gedrehten Ansicht. Wieder wird auf bereits beschriebene Bezugszeichen nicht erneut eingegangen. Zum einen wird in dieser Ansicht die Position des Fixierungselements 23 auf dem Modulgehäuse 20' besser sichtbar. Die zylindrische Wandung des Fixierungselements 23 reicht zum Teil in Wandung des Modulgehäuses 20 hinein und arretiert auf diese Weise die flexible Leiterplatte 16 in den beiden Abschnitten des flächigen Auflageelements 15'.

Der eigentliche Unterschied des Ausführungsbeispiels gemäß Fig. 4 im Vergleich zu den vorherigen Ausführungen betrifft jedoch die Ausgestaltung der Isolierhülse 13'. Das flächige Auflageelement 15' der Isolierhülse 13' ist nämlich in seiner Dicke variabel ausgestaltet, so dass es in einem Zwischenbereich zwischen dem dem Grundkörper zugewandten Bereich und dem Endbereich eine geringere Dicke aufweist. Dadurch wird der zwischen den beiden Kontaktbereiche 16a, 16b der flexiblen Leiterbahn 16 verlaufende Bereich geführt und vor Knicken geschützt.

In Fig. 5 ist schließlich eine Detailansicht eines Kontaktierungsmoduls 8' in der gleichen Ausgestaltung wie der in Fig. 3 gezeigten, dargestellt.

In der Explosionsdarstellung in Fig. 5a) ist das Modulgehäuse 20' mit topfförmiger Geometrie mit der ersten Kontaktscheibe 19 und der zweiten Kontaktscheibe 24 und der zylindrischen Wandung 25 mit einer ersten 25a und einer zweiten 25b Aussparung gezeigt. Oberhalb der zweiten Kontaktscheibe 24 befindet sich die Isolierhülse 13 mit dem Grundkörper 14 und dem flächigen Auflageelement 15. Diese ist bevorzugt als Spritzguss- oder Drehteil aus Kunststoff gearbeitet. Dabei ist der erste Kontaktbereich 16a der flexiblen Leiterplatte 16 im ersten Abschnitt (der kurzen Seite der Isolierhülse 13 zugewandter Bereich) des Auflageelements 14 und der zweite Kontaktbereich 16b der flexiblen Leiterplatte 16 im zweiten Abschnitt (der langen Seite der Isolierhülse 13 zugewandter Bereich) des Auflageelements 14 angeordnet, und zwar derart, dass sich die erste und zweite Leiterbahn jeweils auf der dem flächigen Auflageelement abgewandten Seite befinden. Dabei ist der erste Kontaktbereich 16a mittels der ersten Kontaktscheibe 19 kontaktiert und der zweite Kontaktbereich 16b mittels der zweiten Kontaktscheibe 24 mit der zylindrischen Wandung 25. Auf die zylindrische Wandung 25 folgt schließlich das Fixierungselement 23, welches mittels einer Presspassung mit Kraftschluss auf das Modulgehäuse 20' aufbringbar ist und die Aussparungen25a,25b des Modulgehäuses 20' bis auf den Bereich, in welchem die flexible Leiterplatte 16' aus dem Modulgehäuse 20' seitlich herausgeführt wird, sowie den Bereich, in welchem der Bereich der flexiblen Leiterplatte zwischen den beiden Kontaktbereichen 16a und 16b verläuft, über die Wandung des Modulgehäuses 20' heraussteht, schließt.

Ferner sind im zweiten Endbereich der flexiblen Leiterplatte 16 der Stecker 21 zur Verbindung mit der Elektronikeinheit 7, welche durch die zum Stecker 21 gehörenden Buchse angedeutet ist, sowie der Haltesockel 22 dargestellt.

In Fig. 5b) ist eine zweidimensionale Schnittzeichnung des Kontaktierungsmoduls aus Fig. 5a) gezeigt. Zur Erhaltung der Übersichtlichkeit sind nicht alle Einzelteile mit Bezugszeichen versehen. Wichtig anzumerken ist, dass die erste Kontaktscheibe 19 (hier nicht eingezeichnet, siehe Fig. 5a) den ersten Kontaktbereich 16a der flexiblen Leiterplatte 16 im ersten Abschnitt der Auflageelements 15 kontaktiert, und dass das Modulgehäuse 20 mittels der zweiten Kontaktscheibe 24 den zweiten Kontaktbereich 16b der Leiterplatte 16 kontaktiert. In dieser Ansicht lässt sich insbesondere besonders gut erkennen, dass das das Fixierungselement neben der teilweisen Schließung der Aussparungen 25a,25b die Leiterplatte 16 innerhalb des Modulgehäuses 20 fixiert und im Wesentlichen in einer Ebene arretiert derart, dass die Position der Kontaktbereiche 16,16a der Leiterplatte 16 auf den beiden Abschnitten des Grundkörpers 15 der Isolierhülse13 fest sind.

Eine perspektivische Darstellung des Kontaktierungsmoduls 8' mit der flexiblen Leiterplatte 16 ist schließlich in Fig. 5c gezeigt. Die flexible Leiterplatte 16 wird seitlich aus dem Kontaktierungsmodul 8' herausgeführt und mündet in ihrem zweiten Endbereich in einem Stecker 21 mit einem Haltesockel 22. Durch die Verwendung eines Modulgehäuses 20 mit zwei Aussparungen 25a,25b und eines Fixierungselements 23 ist das Kontaktierungsmodul 8' fest mit der Leiterplatte 16 verbunden.

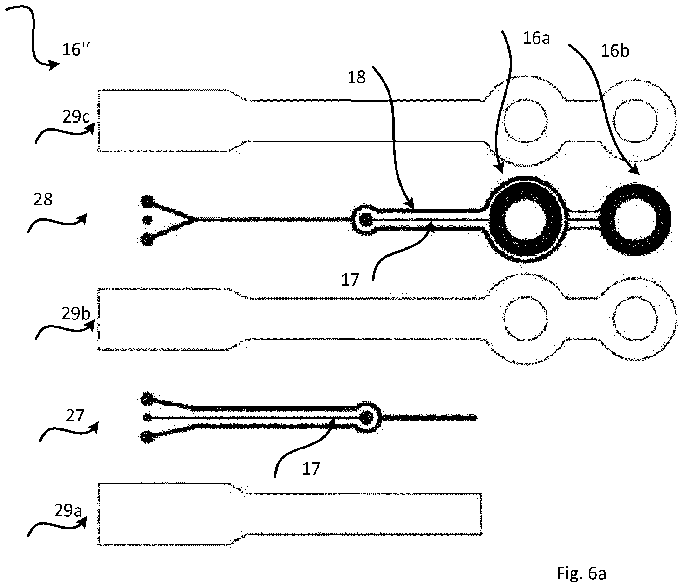

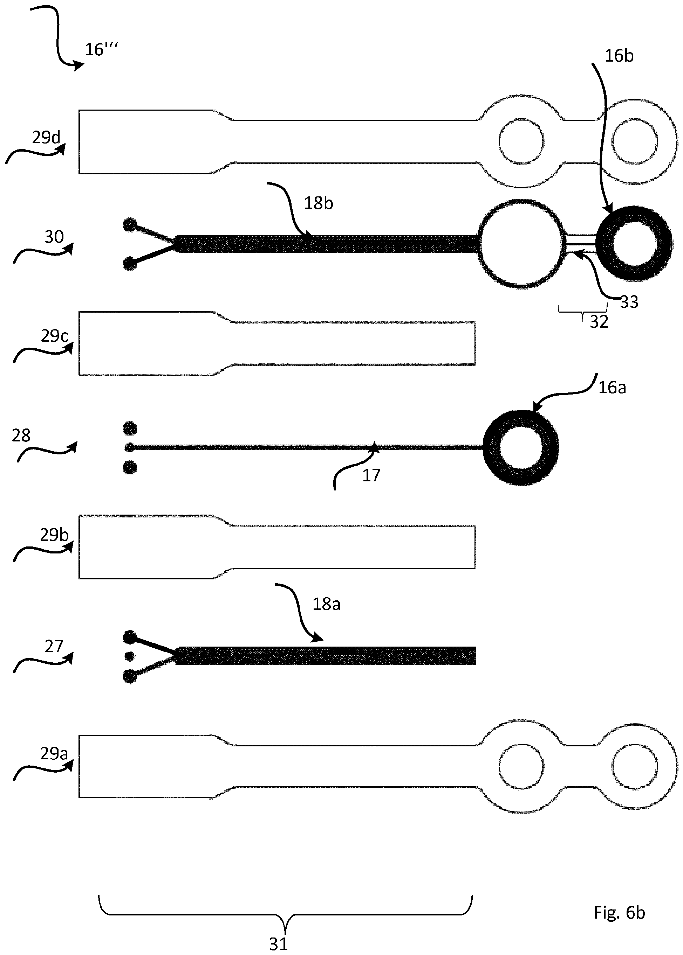

Fig. 6 zeigt schließlich zwei Beispiele für eine erfindungsgemäße Leiterplatte 16. Unabhängig von der Anzahl der Lagen für die flexible Leiterbahn 16 ist darauf zu achten, dass jeweils die zweite Leiterbahn 18 eine gute elektrische Abschirmung der ersten Leiterbahn 17 gewährleistet. Idealerweise muss deshalb die zweite Leiterbahn 18 breiter sein als die erste Leiterbahn. Um allerdings auf der anderen Seite kapazitive Störungen des Messsignals so gering wie möglich zu halten, und entsprechend das Messsignal so wenig wie möglich zu beeinflussen, sollten beide Leiterbahnen so schmal wie möglich ausgestaltet werden.

In Fig. 6a) ist eine zweilagige Leiterplatte 16" dargestellt. Dabei sind die einzelnen Schichten in einer Schnittdarstellung übereinander angeordnet. Die Leiterplatte 16 weist eine erste Schicht 27, und eine zweite Schicht 28 auf. Unterhalb der ersten Schicht 27, oberhalb der zweiten Schicht 28 sowie zwischen der ersten 27 und zweiten Schicht ist jeweils eine Kunststoffschicht 29a-c angeordnet, welche der Isolierung der ersten 27 und zweiten 28 Schicht gegeneinander und gegen die Umgebung dienen. Innerhalb der ersten Schicht 27 verläuft zumindest abschnittsweise die erste Leiterbahn 17, und innerhalb der zweiten Schicht 28 zumindest abschnittsweise die zweite Leiterbahn 18. Die Leiterbahnen 17,18 wechseln in diesem Beispiel die Schichten 27,28, in welchen sie jeweils verlaufen, abschnittsweise.

Fig. 6b) zeigt eine dreilagige Leiterplatte 16''' in der gleichen Darstellungsweise. Die Leiterplatte 16''' weist eine erste Schicht 27', eine zweite Schicht 28' und eine dritte Schicht 30 auf. Wieder ist unterhalb der ersten Schicht 27', jeweils zwischen zwei Schichten und oberhalb der dritten Schicht 30 jeweils eine Kunststoffschicht
29a-d' angeordnet. Die erste Leiterbahn 17 verläuft in der zweiten Schicht 28. Die zweite Leiterbahn 18 dagegen ist zumindest in einem Teilabschnitt in zwei Zweige untergliedert, nämlich in einen ersten Zweig 18a und einen zweiten Zweig 18b. In dem hier gezeigten Beispiel ist die zweite Leiterbahn beispielsweise in dem Bereich 31 bis zu den beiden Kontaktbereichen 16a, 16b in die zwei Zweige 18a und 18b untergliedert, wobei der erste Zweig 18a der zweiten Leiterbahn 18 in der ersten Schicht 27 verläuft, und wobei der zweite Zweig 18b der zweiten Leiterbahn 18 in der dritten Schicht 30 verläuft. In dem Bereich 32 zwischen den beiden Kontaktbereichen 16a und 16b ist die flexible Leiterplatte 16''' dagegen dünner ausgestaltet. Dieser Bereich wird beim Umfalten der Leiterplatte 16''' zu dem Zweck, die beiden Kontaktbereiche 16a und 16b deckungsgleich auf den beiden Abschnitten des Grundkörpers 14 zu positionieren, gebogen. Die dünnere Ausgestaltung macht diesen Bereich leichter, so dass eine höhere Biegsamkeit vorliegt, was zumindest für den Bereich 32 wünschenswert ist. Darüber hinaus ist die elektrischen Leitung 33 im Bereich 32 redundant in Form von drei paralleler Leitungszweige ausgestaltet, wobei jeder Leitungszweig einen gegenüber der restlichen Leitung geringeren Durchmesser aufweist. Selbst eine Beschädigung des Bereichs 32 zwischen den beiden Kontaktbereichen 16a und 16b ist für die Messung unschädlich, da in dem Bereich 32 lediglich die zweite Leiterbahn 18 verläuft, welche der Kontaktierung der Zusatzelektrode, bzw. Guardelektrode 6 dient.

### Bezugszeichen

- 1: Sondeneinheit
- 2: Behälter
- 3: Medium
- 4: Wandung des Behälters
- 5: Sondenelektrode
- 6: Guardelektrode
- 7: Elektronikeinheit
- 8: Kontaktierungsmodul
- 9: Sondengehäuse
- 9a: Verjüngung des Sondengehäuses
- 10,10a: Isolierungen
- 11, 11a: Muttern
- 12: federndes Element
- 13: Isolierhülse
- 14: zylindrischer Grundkörper
- 15: flächiges Auflageelement
- 16: flexible Leiterplatte
- 16a, 16b: erster, zweiter Kontaktbereich der flexiblen Leiterplatte
- 17: erste Leiterbahn der Leiterplatte
- 18: zweite Leiterbahn der Leiterplatte
- 19: erste Kontaktscheibe
- 20: Modulgehäuse mit zweiter Kontaktscheibe und zylindrischer Wandung
- 21: Stecker
- 22: Haltesockel
- 23: Fixierungselement
- 24: zweite Kontaktscheibe (Modulgehäuses)
- 25: zylindrische Wandung (Modulgehäuse)
- 25a,25b: erste, zweite Aussparung der zylindrischen Wandung (Modulgehäuse)
- 26: Presspassung des Fixierungselements
- 27: erste Schicht einer Leiterbahn
- 28: zweite Schicht einer Leiterbahn
- 29a-d: Kunststoffschichten der Leiterbahn
- 30: dritte Schicht einer Leiterbahn
- 31: Bereich bis zu den beiden Kontaktbereichen 16a und 16b
- 32: Bereich zwischen den beiden Kontaktbereichen 16a und 16b
- 33: elektrische Leitung innerhalb des Bereichs 32

## Patentansprüche

1. Sondeneinheit (1) mit zumindest
- einem Sondengehäuse (9),
- einer zumindest abschnittsweise stabförmigen Sondenelektrode (5),
- einer Zusatzelektrode (6),
welche die Sondenelektrode (5) zumindest abschnittsweise koaxial umgibt und durch eine elektrische Isolierung (10) von der Sondenelektrode (5) getrennt ist,
- einem ersten Befestigungsmittel (11),
mittels welchem die Zusatzelektrode (6) in dem Sondengehäuse (9) befestigt ist,
- einem Kontaktierungsmodul (8),
welches auf einen in dem Sondengehäuse (9) angeordneten stabförmigen Abschnitt der Sondenelektrode (5) aufbringbar ist, und
- mit einem zweiten Befestigungsmittel (11a) zur Befestigung des Kontaktierungsmoduls (8) an der Sondenelektrode (5),
wobei das Kontaktierungsmodul (8) zumindest folgende Komponenten umfasst:
-- eine Isolierhülse (13),
--- welche einen im Wesentlichen zylindrischen Grundkörper (14) zur Aufnahme eines Abschnitts der stabförmigen Sondenelektrode (5) und ein im Wesentlichen orthogonal zu dem Grundkörper (14) ausgerichtetes flächiges Auflageelement (15), welches den Grundkörper (14) in einen ersten Abschnitt und einen zweiten Abschnitt unterteilt, aufweist,
-- eine flexible Leiterplatte (16)
--- mit mindestens einer ersten Leiterbahn (17) zur elektrischen Kontaktierung der Sondenelektrode (5) und einer zweiten Leiterbahn (18) zur elektrischen Kontaktierung der Zusatzelektrode (6),
--- welche flexible Leiterplatte (16) in einem Endbereich über einen ersten Kontaktbereich (16a) verfügt, in welchen die erste Leiterbahn (17) mündet, und über einen zweiten Kontaktbereich (16b), in welchen die zweite Leiterbahn (17) mündet,
--- wobei der erste Kontaktbereich (16a) und der zweite Kontaktbereich (16b) jeweils eine zentrale Ausnehmung aufweisen, deren Durchmesser mindestens gleich dem Außendurchmesser des Grundkörpers (14) der Isolierhülse (13) ist,
--- und wobei zumindest die zentralen Ausnehmungen des ersten Kontaktbereiches (16a) und des zweiten Kontaktbereiches (16b) durch Umfalten der Leiterplatte (16) in Deckung bringbar sind, sodass der erste Kontaktbereich (16a) auf den ersten Abschnitt des Grundkörpers (14) und der zweite Kontaktbereich (16b) auf den zweiten Abschnitt des Grundkörpers (14) aufbringbar ist, und
-- ein Modulgehäuse (20),
wobei die Sondeneinheit eine erste Kontaktscheibe aufweist, welche erste Kontaktscheibe (19) auf den ersten Abschnitt des Grundkörpers (14) der Isolierhülse (13) aufbringbar ist und die erste Leiterbahn (17) in dem ersten Kontaktbereich (16a) elektrisch kontaktiert, **dadurch gekennzeichnet, dass** das Modulgehäuse elektrisch leitfähig ist,
dass das Modulgehäuse (20) eine zweite Kontaktscheibe (24) aufweist, welche zweite Kontaktscheibe auf den zweiten Abschnitt des Grundkörpers (14) der Isolierhülse (13) aufbringbar ist und die zweite Leiterbahn (18) im zweiten Kontaktbereich (16b) elektrisch kontaktiert,
wobei das Modulgehäuse (20) eine topfförmige Geometrie aufweist, mit einer von der zweiten Kontaktscheibe (24) ausgehenden parallel zum Grundkörper (14) verlaufenden zylindrischen Wandung (25), welche Wandung (25) so ausgestaltet ist, dass sie zumindest die Sondenelektrode (5) im Bereich in welchem das Kontaktierungsmodul (8) aufgebracht ist, die Isolierhülse (13) zumindest im Bereich des Auflageelements (15) und die flexible Leiterplatte (16) zumindest im Bereich der beiden Kontaktbereiche (16a, 16b) umgibt und elektromagnetisch abschirmt, und
wobei die erste Kontaktscheibe (19) einen geringeren Außendurchmesser aufweist als die zweite Kontaktscheibe (24).

2. Sondeneinheit nach Anspruch 1,
**dadurch gekennzeichnet,**
**dass** die flexible Leiterplatte (16) eine Semiflex-Leiterplatte, insbesondere eine aus zumindest zwei Schichten (27,28) aufgebaute Leiterplatte (16) mit einer ersten Schicht (27), in welcher zumindest abschnittsweise die erste Leiterbahn (17) verläuft, und mit einer zweiten Schicht (28), in welcher zumindest abschnittsweise die zweite Leiterbahn (18) verläuft, ist.

3. Sondeneinheit nach Anspruch 1 oder 2,
**dadurch gekennzeichnet,**
**dass** die flexible Leiterplatte (16) eine dreilagige Leiterplatte ist mit einer ersten Schicht (27), einer zweiten Schicht (28) und einer dritten Schicht (30), wobei die zweite Schicht (28) zwischen der ersten Schicht (27) und der dritten Schicht (30) angeordnet ist, wobei die erste Leiterbahn (17)in der zweiten Schicht (28) verläuft, wobei die zweite Leiterbahn (18) zumindest in dem Bereich (31) bis zu den beiden Kontaktbereichen (16a,16b) in einen ersten Zweig (18a) und in einen zweiten Zweig (18b) untergliedert ist, und wobei der erste Zweig (18a) der zweiten Leiterbahn (18) in der ersten Schicht (27) verläuft, und wobei der zweite Zweig (18b) der zweiten Leiterbahn (18) in der dritten Schicht (30) verläuft.

4. Sondeneinheit nach Anspruch 1 oder 2,
**dadurch gekennzeichnet,**
**dass** die flexible Leiterplatte eine zweilagige Leiterplatte ist mit einer ersten (27) Schicht und einer zweiten Schicht (28), und mit einem in Bezug auf die Längsrichtung der Leiterplatte (16) ersten und zweiten Teilbereich, wobei im ersten Teilbereich die erste Leiterbahn (17) in der ersten Schicht (27) und die zweite Leiterbahn (18) in der zweiten Schicht (28) verläuft, und wobei im zweiten Teilbereich die zweite Leiterbahn (18) in der ersten Schicht (27) und die erste Leiterbahn (17) in der zweiten Schicht (28) verläuft.

5. Sondeneinheit nach zumindest einem der vorhergehenden Ansprüche,
**dadurch gekennzeichnet,**
**dass** die Wandung (25) des Modulgehäuses zumindest eine Aussparung (25a,25b) aufweist, welche der Einbringung der flexiblen Leiterplatte (16) in das Kontaktierungsmodul (8) mit einer Orientierung senkrecht zu dessen Wandung (25) dient.

6. Sondeneinheit nach zumindest einem der vorhergehenden Ansprüche,
**dadurch gekennzeichnet,**
**dass** die Wandung (25) des Modulgehäuses (20) genau zwei Aussparungen (25a,25b) aufweist, welche sich gegenüberliegen, wobei die Leiterplatte (16) durch die erste Aussparung (25a) in das Kontaktierungsmodul (8) eingebracht ist, und wobei im Bereich der zweiten Aussparung (25b) der Wandung (25) zumindest teilweise der Bereich der Leiterplatte (16), welcher zwischen den beiden Kontaktbereichen (16a, 16b) verläuft, angeordnet ist.

7. Sondeneinheit nach Anspruch 5 oder 6,
**dadurch gekennzeichnet,**
**dass** ein Fixierungselement (23) lösbar auf das Modulgehäuse (20) aufgebracht ist, welches die flexible Leiterplatte (16) im Wesentlichen in einer Ebene arretiert und die zumindest eine Aussparung (25a,25b) in der Wandung (25) des Modulgehäuses (20) im Wesentlichen schließt.

8. Sondeneinheit nach Anspruch 7,
**dadurch gekennzeichnet,**
**dass** das Fixierungselement (23) mittels einer Presspassung mit Kraftschluss auf das Modulgehäuse (20) aufgebracht ist.

9. Sondeneinheit nach Anspruch 5,
**dadurch gekennzeichnet,**
**dass** die Dicke des flächigen Auflageelements (15) der Isolierhülse (13) variabel ist, insbesondere, dass die Dicke in einem ersten dem Grundkörper (14) zugewandten Anfangsbereich und im dem Grundkörper (14) abgewandten Endbereich dicker ist als im dazwischenliegenden Mittelbereich, und wobei die Dicke des Endbereichs maximal so groß wie die im Anfangsbereich ist.

10. Sondeneinheit nach einem der vorangehenden Ansprüche,
**dadurch gekennzeichnet,**
**dass** die Sondenelektrode (5) in einem in das Sondengehäuse (9) hineinragenden Endbereich frei von der Zusatzelektrode (6) ist,
und **dass** das Kontaktierungsmodul (8) derart auf die Sondenelektrode (5) aufgebracht ist, dass die zweite Leiterbahn (18) zumindest teilweise auf der Zusatzelektrode (6) aufliegt.

11. Sondeneinheit nach einem der vorangehenden Ansprüche,
**dadurch gekennzeichnet,**
**dass** es sich bei dem ersten Befestigungsmittel (11) um eine Mutter handelt, welche auf die Zusatzelektrode (6) aufgebracht ist
und/oder
**dass** es sich bei dem zweiten Befestigungsmittel (11a) um eine Mutter handelt, welche auf die Sondenelektrode (5) aufgebracht ist.

12. Sondeneinheit nach einem der vorangehenden Ansprüche,
**dadurch gekennzeichnet,**
**dass** zwischen dem Kontaktierungsmodul (8) und dem zweiten Befestigungsmittel (11a) ein federndes Element (12) oder eine mitverspannte federnde Schraubensicherung angeordnet ist.

13. Sondeneinheit nach einem der vorangehenden Ansprüche,
**dadurch gekennzeichnet,**
**dass** das Fixierungselement (23) elektrisch leitfähig ist, insbesondere aus einem Metall besteht.

## Claims

1. Probe unit (1) with at least
- a probe housing (9),
- a probe electrode (5) at least partially rod-shaped,
- an additional electrode (6),
which at least partially surrounds the probe electrode (5) in a coaxial manner and is separated from the probe electrode (5) by electrical insulation (10),
- a first fastening means (11),
by means of which the additional electrode (6) is secured in the probe housing (9),
- a contact module (8),
which can be installed on a part of the probe electrode (5) arranged in the probe housing (9), and
- with a second fastening means (11a) designed to fasten the contact module (8) on the probe electrode (5),
wherein the contact module (8) comprises at least the following components:
-- an insulation sleeve (13),
--- which has an essentially cylindrical meter body (14), designed to receive a part of the rod-shaped probe electrode (5) and a flat support element (15), which is oriented in an essentially orthogonal manner in relation to the meter body (14), wherein said support element divides the meter body (14) into a first part and into a second part,
-- a flexible printed circuit board (16)
--- with at least a first conductive track (17) to establish electrical contact with the probe electrode (5) and a second conductive track (18) to establish electrical contact with the additional electrode (6),
--- wherein, in an terminal area, said flexible printed circuit board (16) has a first contact zone (16a) into which the
first conductive track (17) enters, and a second contact zone (16b) into which the second conductive track (17) enters,
--- wherein the first contact zone (16a) and the second contact zone (16b) each have a central recess whose diameter is at least equal to the outer diameter of the meter body (14) of the insulation sleeve (13),
--- and wherein at least the central recesses of the first contact zone (16a) and of the second contact zone (16b) can be aligned by folding the printed circuit board (16) such that the first contact zone (16a) can be fitted on the first part of the meter body (14) and the second contact zone (16b) can be fitted on the second part of the meter body (14), and
-- a module housing (20),
wherein the probe unit has a first contact disk, wherein said first contact disk (19) can be installed on the first part of the meter body (14) of the insulation sleeve (13) and enters into electrical contact with the first conductive track (17) in the first contact zone (16a),
**characterized in that**
the module housing is electrically conductive,
the module housing (20) comprises a second contact disk (24), wherein said second contact disk can be installed on the second part of the meter body (14) of the insulation sleeve (13) and enters into electrical contact with the second conductive track (18) in the second contact zone (16b),
wherein the module housing (20) has a pot-like shape, with a cylindrical wall (25) extending from the second contact disk (24) parallel to the meter body (14), wherein said wall (25) is designed in such a way that it surrounds and electromagnetically protects at least the probe electrode (5) in the area in which the contact module (8) is mounted, the insulation sleeve (13) at least in the area of the support element (15) and the flexible printed circuit board (16) at least in the area of the two contact areas (16a, 16b), and wherein the first contact disk (19) has an outer diameter that is smaller than the second contact disk (24).

2. Probe unit as claimed in Claim 1,
**characterized in that**
the flexible printed circuit board (16) is a semi-flex printed circuit board, particularly a printed circuit board (16) made of at least two layers (27, 28), with a first layer (27) in which the first conductive track (17) extends at least in part, and with a second layer (28) in which the second conductive track (18) extends at least in part.

3. Probe unit as claimed in Claim 1 or 2,
**characterized in that**
the flexible printed circuit board (16) is a three-layer printed circuit board with a first layer (27), a second layer (28) and a third layer (30), wherein the second layer (28) is arranged between the first layer (27) and the third layer (30), wherein the first conductive track (17) extends in the second layer (28), wherein the second conductive track (18) is subdivided into a first branch (18a) and a second branch (18b) at least in the area (31) up to the two contact areas (16a, 16b), and wherein the first branch (18a) of the second conductive track (18) extends in the first layer (27), and wherein the second branch (18b) of the second conductive track (18) extends in the third layer (30).

4. Probe unit as claimed in Claim 1 or 2,
**characterized in that**
the flexible printed circuit board is a two-layer printed circuit board with a first layer (27) and a second layer (28), and with a first and a second subsection in relation to the longitudinal direction of the printed circuit board (16), wherein in the first subsection the first conductive track (17) extends in the first layer (27) and the second conductive track (18) extends in the second layer (28) and wherein, in the second subsection, the second conductive track (18) extends in the first layer (27) and the first conductive track (17) extends in the second layer (28).

5. Probe unit as claimed in at least one of the previous claims,
**characterized in that**
the wall (25) of the module housing has at least a recess (25a, 25b), wherein said recess is used to insert the flexible printed circuit board (16) in the contact module (8) with an orientation perpendicular to the wall (25).

6. Probe unit as claimed in at least one of the previous claims,
**characterized in that**
the wall (25) of the module housing (20) has precisely two recesses (25a, 25b) opposite one another, wherein the printed circuit board (16) is introduced into the contact module (8) through the first recess (25a) and wherein the section of the printed circuit board (16) which extends between the two contact areas (16a, 16b) is at least partially arranged in the area of the second recess (25b) of the wall (25).

7. Probe unit as claimed in Claim 5 or 6,
**characterized in that**
a fastening element (23) is installed in a detachable manner on the module housing (20), wherein said element essentially locks the flexible printed circuit board (16) on a plane and essentially closes the at least one recess (25a, 25b) in the wall (25) of the module housing (20).

8. Probe unit as claimed in Claim 7,
**characterized in that**
the fastening element (23) is installed on the module housing (20) by means of a force-type press fit.

9. Probe unit as claimed in Claim 5,
**characterized in that**
the thickness of the flat support element (15) of the insulation sleeve (13) is variable, particularly **in that** the thickness in a first initial section facing towards the meter body (14) and in the end section facing away from the meter body (14) is thicker than in the intermediate middle section, and wherein the thickness of the end section is, at maximum, as thick as in the initial section.

10. Probe unit as claimed in at least one of the previous claims,
**characterized in that**
the probe electrode (5) is free of the additional electrode (6) in an end section projecting into the probe housing (9),
the contact module (8) is installed on the probe electrode (5) in such a way that the second conductive track (18) at least partially rests on the additional electrode (6).

11. Probe unit as claimed in one of the previous claims,
**characterized in that**
the first fastening means (11) comprises a nut that is fitted on the additional electrode (6) and/or
the second fastening means (11a) comprises a nut that is fitted on the probe electrode (5).

12. Probe unit as claimed in one of the previous claims,
**characterized in that**
a spring element (12) or a braced elastic screw lock is arranged between the contact module (8) and the second fastening means (11a).

13. Probe unit as claimed in one of the previous claims,
**characterized in that**
the fastening element (23) is electrically conductive and is particularly made of a metal.

## Revendications

1. Unité de sonde (1) avec au moins
- un boîtier de sonde (9),
- une électrode de sonde (5) au moins partiellement en forme de tige,
- une électrode auxiliaire (6),
laquelle électrode entoure au moins partiellement de manière coaxiale l'électrode de sonde (5) et laquelle électrode est séparée de l'électrode de sonde (5) par une isolation électrique (10),
- un premier élément de fixation (11),
au moyen duquel l'électrode auxiliaire (6) est fixée dans le boîtier de sonde (9),
- un module de contact (8),
lequel module peut être installé sur une partie en forme de tige de l'électrode de sonde (5), disposée dans le boîtier de sonde (9), et
- avec un deuxième élément de fixation (11a) destiné à la fixation du module de contact (8) sur l'électrode de sonde (5),
le module de contact (8) comprenant au moins les composants suivants :
-- une douille isolante (13),
--- laquelle présente un corps de base (14) pour l'essentiel cylindrique, destiné à recevoir une partie de l'électrode de sonde (5) en forme de tige et un élément de support (15) plat, orienté de manière pour l'essentiel orthogonale par rapport au corps de base (14), lequel élément de support divise le corps de base (14) en une première partie et en une deuxième partie,
-- une carte de circuit imprimé flexible (16)
--- avec au moins une première piste conductrice (17) pour établir un contact électrique avec l'électrode de sonde (5) et une deuxième piste conductrice (18) pour établir un contact électrique avec l'électrode auxiliaire (6),
--- laquelle carte de circuit imprimé flexible (16) présente, dans une zone finale, une première zone de contact (16a) dans laquelle débouche la première piste conductrice (17), et une deuxième zone de contact (16b) dans laquelle débouche la deuxième piste conductrice (17),
--- la première zone de contact (16a) et la deuxième zone de contact (16b) présentant chacune un évidement central, dont le diamètre est au moins égal au diamètre extérieur du corps de base (14) de la douille isolante (13),
--- et au moins les évidements centraux de la première zone de contact (16a) et de la deuxième zone de contact (16b) pouvant être amenés en alignement en pliant la carte de circuit imprimé (16), de sorte que la première zone de contact (16a) puisse être installée sur la première partie du corps de base (14) et la deuxième zone de contact (16b) puisse être installée sur la deuxième partie du corps de base (14), et
-- un boîtier de module (20),
l'unité de sonde comprenant un premier disque de contact, lequel premier disque de contact (19) peut être installé sur la première partie du corps de base (14) de la douille isolante (13) et entre en contact électrique avec la première piste conductrice (17) dans la première zone de contact (16a),
**caractérisé**
**en ce que** le boîtier de module est électriquement conducteur,
**en ce que** le boîtier de module (20) comprend un deuxième disque de contact (24), lequel deuxième disque de contact peut être installé sur la deuxième partie du corps de base (14) de la douille isolante (13) et entre en contact électrique avec la deuxième piste conductrice (18) dans la deuxième zone de contact (16b),
le boîtier de module (20) présentant une géométrie en forme de pot, avec une paroi cylindrique (25) s'étendant à partir du deuxième disque de contact (24) parallèlement au corps de base (14), laquelle paroi (25) est conçue de telle sorte qu'elle entoure au moins l'électrode de sonde (5) dans la zone dans laquelle le module de contact (8) est monté, la douille isolante (13) au moins dans la zone de l'élément de support (15) et la carte de circuit imprimé flexible (16) au moins dans la zone des deux zones de contact (16a, 16b), et les protège électromagnétiquement, et le premier disque de contact (19) présentant un diamètre extérieur plus petit que le deuxième disque de contact (24).

2. Unité de sonde selon la revendication 1,
**caractérisée**
**en ce que** la carte de circuit imprimé flexible (16) est une carte de circuit imprimé semi-flexible, notamment une carte de circuit imprimé (16) constituée d'au moins deux couches (27, 28), avec une première couche (27) dans laquelle la première piste conductrice (17) s'étend au moins par sections, et avec une deuxième couche (28) dans laquelle la deuxième piste conductrice (18) s'étend au moins par sections.

3. Unité de sonde selon la revendication 1 ou 2,
**caractérisée**
**en ce que** la carte de circuit imprimé flexible (16) est une carte de circuit imprimé à trois couches avec une première couche (27), une deuxième couche (28) et une troisième couche (30), la deuxième couche (28) étant disposée entre la première couche (27) et la troisième couche (30), la première piste conductrice (17) s'étendant dans la deuxième couche (28), la deuxième piste conductrice (18) étant subdivisée en une première branche (18a) et une deuxième branche (18b) au moins dans la zone (31) jusqu'aux deux zones de contact (16a, 16b), et la première branche (18a) de la deuxième piste conductrice (18) s'étendant dans la première couche (27), et la deuxième branche (18b) de la deuxième piste conductrice (18) s'étendant dans la troisième couche (30).

4. Unité de sonde selon la revendication 1 ou 2,
**caractérisée**
**en ce que** la carte de circuit imprimé flexible est une carte de circuit imprimé à deux couches avec une première couche (27) et une deuxième couche (28), et avec une première et une deuxième zone partielle par rapport à la direction longitudinale de la carte de circuit imprimé (16), unité pour laquelle, dans la première zone partielle, la première piste conductrice (17) s'étend dans la première couche (27) et la deuxième piste conductrice (18) s'étend dans la deuxième couche (28) et unité pour laquelle, dans la deuxième zone partielle, la deuxième piste conductrice (18) s'étend dans la première couche (27) et la première piste conductrice (17) s'étend dans la deuxième couche (28).

5. Unité de sonde selon au moins l'une des revendications précédentes,
**caractérisée**
**en ce que** la paroi (25) du boîtier de module présente au moins un évidement (25a, 25b), lequel évidement sert à insérer la carte de circuit imprimé flexible (16) dans le module de contact (8) avec une orientation perpendiculaire à sa paroi (25).

6. Unité de sonde selon au moins l'une des revendications précédentes,
**caractérisée**
**en ce que** la paroi (25) du boîtier de module (20) présente exactement deux évidements (25a, 25b) opposés l'un à l'autre, la carte de circuit imprimé (16) étant introduite dans le module de contact (8) par le premier évidement (25a) et la zone de la carte de circuit imprimé (16) qui s'étend entre les deux zones de contact (16a, 16b) étant disposée au moins partiellement dans la zone du deuxième évidement (25b) de la paroi (25).

7. Unité de sonde selon la revendication 5 ou 6,
**caractérisée**
**en ce qu'**un élément de fixation (23) est installé de manière détachable sur le boîtier de module (20), lequel élément bloque la carte de circuit imprimé flexible (16) pour l'essentiel dans un plan et ferme pour l'essentiel l'au moins un évidement (25a, 25b) dans la paroi (25) du boîtier de module (20).

8. Unité de sonde selon la revendication 7,
**caractérisée**
**en ce que** l'élément de fixation (23) est installé sur le boîtier de module (20) au moyen d'un ajustement serré.

9. Unité de sonde selon la revendication 5,
**caractérisée**
**en ce que** l'épaisseur de l'élément d'appui plat (15) de la douille isolante (13) est variable, notamment **en ce que** l'épaisseur dans une première zone initiale tournée vers le corps de base (14) et dans la zone finale opposée au corps de base (14) est plus épaisse que dans la zone médiane intermédiaire, et l'épaisseur de la zone finale est au plus égale à celle de la zone initiale.

10. Unité de sonde selon au moins l'une des revendications précédentes,
**caractérisée**
**en ce que** l'électrode de sonde (5) est libre de l'électrode auxiliaire (6) dans une zone d'extrémité faisant saillie dans le boîtier de sonde (9),
et **en ce que** le module de contact (8) est installé sur l'électrode de sonde (5) de telle sorte que la deuxième piste conductrice (18) repose au moins partiellement sur l'électrode auxiliaire (6).

11. Unité de sonde selon l'une des revendications précédentes,
**caractérisée**
**en ce que** le premier moyen de fixation (11) est un écrou installé sur l'électrode auxiliaire (6) et/ou
**en ce que** le deuxième moyen de fixation (11a) est un écrou installé sur l'électrode de sonde (5).

12. Unité de sonde selon l'une des revendications précédentes,
**caractérisée**
**en ce qu'**un élément élastique (12) ou un frein-filet élastique est disposé entre le module de contact (8) et le deuxième moyen de fixation (11a).

13. Unité de sonde selon l'une des revendications précédentes,
**caractérisée**
**en ce que** l'élément de fixation (23) est électriquement conducteur et est notamment constitué d'un métal.
